# FASCICULE DE BREVET EUROPEEN

(11) **EP 3 175 146 B1**
(45) Date de publication et mention de la délivrance du brevet: **28.08.2019**
(21) Numéro de dépôt: 15753964.4
(22) Date de dépôt: 20.07.2015
(51) Int. Cl.: F16H 25/22, F16D 65/18, F16H 25/20, F16D 121/24, F16D 125/40, F16D 125/50

(54) **RÉDUCTEUR DE COUPLE**
DREHMOMENTUNTERSETZUNGSGETRIEBE
TORQUE REDUCER

(30) Priorité: 30.07.2014 FR 1457381
(43) Date de publication de la demande: 07.06.2017
(73) Titulaire: Chassis Brakes International B.V., 5656 AG Eindhoven (NL)
(72) Inventeur: PASQUET, Thierry, F-94700 Vincennes (FR); TELEGA, Philippe, F-60128 Plailly (FR)
(74) Mandataire: Potdevin, Emmanuel Eric
(86) Numéro de dépôt international: PCT/FR2015/051990
(87) Numéro de publication internationale: WO 2016/016542

(56) Documents cités:
- DE-A1- 19 637 526
- FR-A- 1 574 976
- FR-A1- 2 839 127
- FR-A1- 2 984 443
- JP-A- 2005 133 863

## Description

L'invention se rapporte au domaine des réducteurs et plus particulièrement au domaine des réducteurs comprenant une vis à rouleaux dits « satellites » ou « planétaires ».

On connait des réducteurs mettant en oeuvre une vis à rouleaux satellites, telles que les vis à rouleaux avec recirculation des rouleaux et d'autres types de vis à rouleaux, comme les vis à rouleaux inversés notamment.

De manière classique, un réducteur muni d'une vis à rouleaux comprend une vis centrale, des rouleaux filetés et un carter taraudé logeant les rouleaux. Dans le cas d'une vis à recirculation de rouleaux, la vis et le carter ont des filets orientés dans le même sens tandis que les rouleaux sont munis de filets agencés perpendiculairement à l'axe de la vis. Pour les vis à rouleaux inversés, les filets des rouleaux sont orientés dans le même sens que les filets de la vis et du carter mais selon un angle d'hélice différent.

Il est envisageable de prévoir un réducteur du type précité dans un actionneur électromécanique de freinage d'un véhicule. Toutefois cela augmente le coût de fabrication d'un tel actionneur. En effet, il est particulièrement difficile de coupler un moteur électrique bon marché à un réducteur du type précité car la vitesse de rotation des moteurs bon marché est généralement très élevée. En fait, les réducteurs de l'état de la technique munis d'une vis à rouleaux ont une capacité de réduction qui n'est pas suffisante pour pouvoir être couplés avec un moteur électrique à très haute vitesse de rotation. L'utilisation des réducteurs de l'état de la technique nécessite donc l'emploi de moteurs électriques dont la vitesse est moindre, mais dont le prix de revient est plus élevé.

Le document FR-2 839 127 divulgue quant à lui un réducteur conforme au préambule de la revendication 1.

La présente invention vise à proposer un réducteur dont les capacités de réduction sont améliorées.

A cet effet, l'invention a pour objet un réducteur selon la revendication 1.

Ainsi, un tel réducteur permet d'offrir une alternative aux réducteurs connus tout en améliorant leur capacité de réduction jusqu'à un rapport de réduction pouvant atteindre 1/180 sans générer d'augmentation de l'encombrement du réducteur. De plus, la rotation des rouleaux permet d'entraîner le carter en translation dans le cas où la vis est fixe, ou bien la vis en translation si c'est le carter qui est fixe.

De plus, pour ce type de réducteur, dit à « double étage de réduction », l'orientation dans le même sens des filets des rouleaux externes en prise avec ceux du carter externe offre une alternative aux réducteurs comportant des rouleaux externes dont les filets seraient orientés dans le même sens que celui des filets des carters interne et externe. Par ailleurs, un tel réducteur possède une capacité de réduction améliorée par rapport aux réducteurs à double étages de réduction connus.

Avantageusement, la vis et le carter interne comportent chacun plusieurs filets, de préférence au moins trois filets.

Ainsi, la capacité de réduction du réducteur peut être encore améliorée.

De préférence les rouleaux internes sont en prise directe avec la vis et le carter interne.

De préférence encore, aucun des rouleaux du réducteur n'est en prise directe avec un autre des rouleaux.

Par exemple, le réducteur est configuré pour être commandé électriquement.

Ainsi, le réducteur permet de supprimer les inconvénients rencontrés habituellement avec l'utilisation d'un actionneur hydraulique.

L'invention a également pour objet un actionneur de freinage de véhicule comportant un réducteur selon l'invention configuré pour actionner un frein de service ou un frein de parking d'un véhicule.

Ainsi, l'actionneur permet de produire le freinage d'un véhicule en mettant en oeuvre le réducteur selon l'invention. Les avantages liés à l'utilisation d'un actionneur de freinage muni d'un tel réducteur sont nombreux. Par exemple, l'actionneur n'a plus besoin de faire l'objet d'une maintenance car un actionneur de ce type ne s'use pratiquement pas. On comprend que, grâce à la capacité de réduction élevée du réducteur qui équipe cet actionneur de freinage, il devient possible d'utiliser un moteur électrique dont la vitesse de rotation est élevée et dont le coût est faible. Par ailleurs, le freinage lui-même ne nécessite qu'une faible consommation d'énergie car c'est la variation du freinage qui absorbe ici l'énergie. Un autre avantage réside dans le fait que la course de la vis par rapport au carter est relativement courte, ce qui améliore la précision du freinage et autorise la mise en place de dispositifs spécifiques comme par exemple un détecteur sur la pédale de frein, ou encore un radar anticollision.

Également, un réducteur selon l'invention permet de compenser l'usure des plaquettes de freins et du disque car dès l'apparition d'un jeu, celui-ci peut être rattrapé par un déplacement approprié de la pièce correspondante du réducteur.

Avantageusement, l'actionneur est configuré pour commander un frein à disque.

On peut prévoir que l'actionneur comprend un étrier flottant sur lequel est rigidement fixée une plaquette de frein.

Ainsi, immédiatement après le freinage, la plaquette s'éloignera du disque conjointement avec l'étrier, ce qui permet d'éviter tout couple de freinage résiduel non désiré.

L'invention a également pour objet un frein à disque comportant un actionneur entraîné par un moteur électrique, l'actionneur étant conforme à l'actionneur décrit précédemment.

Enfin, on peut également prévoir que le carter interne, le carter externe et la vis sont fabriqués en un matériau polymère chargé d'un renfort.

Nous allons maintenant décrire deux actionneurs ne faisant pas partie de l'invention et un mode de réalisation de l'invention à titre d'exemples non limitatifs en référence aux dessins annexés sur lesquels :
- la figure 1 est une vue en perspective d'un actionneur ne faisant pas partie de l'invention dans lequel le carter est représenté en coupe ;
- la figure 2 est une vue en coupe d'un actionneur ne faisant pas partie de l'invention et ;
- la figure 3 est une vue en coupe d'un actionneur de freinage formant un mode de réalisation de l'invention.

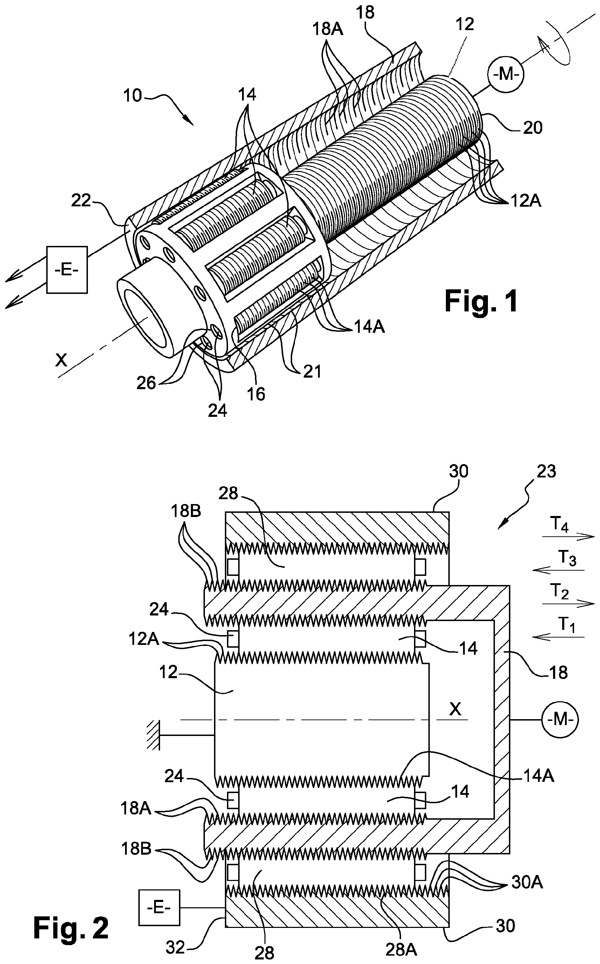

En référence à la figure 1, dans l'actionneur de freinage présenté, le réducteur 10 comporte une vis interne 12, des rouleaux 14 agencés autour de la vis, une cage 16 de maintien des rouleaux et un carter 18.

La vis 12 présente trois filets 12A orientés selon un même premier sens. Une extrémité 20 de la vis 12 est destinée à être rigidement fixée à un moyen d'entrainement en rotation, tel qu'un moteur électrique M de l'actionneur par exemple. Ainsi, le réducteur est configuré pour être commandé électriquement. L'autre extrémité de la vis comporte un bord libre, lisse et creux.

Les rouleaux 14 sont filetés et ont un axe longitudinal parallèle à l'axe X de la vis. Ils présentent chacun un unique filet 14A qui vient en prise directe avec les filets 12A de la vis. Le filet 14A de chaque rouleau 14 est orienté selon un sens inverse des filets 12A de la vis 12.

La cage 16 de maintien des rouleaux 14 présente une forme cylindrique coaxiale à la vis 12 et s'étendant sur une portion réduite de la longueur de la vis. Cette cage 16 comporte des logements longitudinaux 21 configurés pour accueillir les rouleaux à intervalles réguliers autour de la vis. A cet effet, les logements 21 comportent des alésages 26 débouchant aux extrémités de la cage. A leurs extrémités, les rouleaux sont munis de pions de positionnement 24 qui viennent se loger dans les alésages 26 des logements 21. Ainsi, chaque rouleau 14 est maintenu par ses extrémités dans un logement 21 de la cage 16. Dans cet exemple, les rouleaux sont au nombre de 10 et la cage 16 de maintien des rouleaux comporte dix logements, mais pourrait bien sûr en comporter un nombre différent, en fonction du nombre de rouleaux mis en oeuvre. Ainsi, chaque rouleau 14 est monté mobile à rotation dans son logement 21.

Le carter 18 forme une chemise cylindrique entourant la cage 16 et agencée coaxialement avec la vis 12. Le carter 18 comporte une paroi interne pourvue d'un taraudage muni de six filets 18A orientés dans le même sens que celui des filets 14A des rouleaux 14. Le carter 18 vient en prise directe avec les rouleaux. Une extrémité 22 du carter 18 est configurée pour être fixée rigidement à un élément E destiné à être déplacé en translation et ainsi guidé à coulissement par rapport au moteur.

Ainsi, les rouleaux 14 sont chacun en prise directe d'une part avec la vis 12 et d'autre part avec le carter 18 au moyen d'au moins un filet 14A orienté en sens inverse d'un filet 12A de la vis et dans le même sens qu'un filet 18A du carter 18.

Nous allons maintenant présenter le fonctionnement du réducteur 10. On suppose que le réducteur 10 est entraîné en rotation par un arbre d'un moteur électrique M de type « brushless » apte à tourner dans les deux sens de rotation. Lorsque le moteur électrique M est actionné selon un premier sens de rotation, la vis 12 entraîne les rouleaux 14 et la cage 16 en rotation autour de l'axe X. Comme les rouleaux 14 sont en prise avec le carter 18, leur mouvement de rotation génère un mouvement de translation du carter 18 selon l'axe X de la vis.

En d'autres termes, il existe un déplacement axial selon l'axe X entre la vis 12 et les rouleaux 14, entre les rouleaux 14 et le carter 18, et entre le carter 18 et la vis 12. Ainsi, le réducteur permet de déplacer l'élément E selon un mouvement de translation à partir d'un mouvement de rotation du moteur M. L'élément E est par exemple relié à une plaquette de frein destinée à venir en contact avec un disque d'un frein à disque.

Le mouvement de translation conjoint du carter et de l'élément E est ainsi fortement réduit car il résulte d'une différence du nombre de filets 12A, 14A, 18A entre, d'une part, la vis et les rouleaux, d'autre part, les rouleaux et le carter, d'une différence de diamètre entre la vis et le carter, mais également du sens inversé des filets de la vis et des rouleaux.

Dans le cas d'une rotation du moteur M dans le sens inverse, on comprend que les mouvements de rotation et de translation décrits ci-dessus sont inversés, générant ainsi un mouvement de translation de l'élément E dans le sens inverse.

On va maintenant décrire ci-dessous des actionneurs, en se référant aux figures 2 à 3 sur lesquelles les éléments analogues à ceux de la figure 1 sont désignés par des références identiques.

En référence à la figure 2, on a représenté un réducteur 23, ne faisant pas partie de l'invention, dit réducteur « à double étage de réduction ». Ce type de réducteur 23, qui est adapté pour être utilisé comme actionneur de freinage, comporte des éléments sensiblement identiques à ceux précédemment présentés, à savoir, une vis 12 présentant trois filets 12A, des rouleaux 14 munis d'un filet 14A orienté dans le sens inverse des filets de la vis et un carter 18 muni de six filets internes 18A orientés dans le même sens que les filets des rouleaux. Dans ce réducteur, les rouleaux sont appelés rouleaux internes 14 et le carter est dit carter interne 18. Ces éléments sont agencés les uns par rapport aux autres comme dans l'actionneur précédent, à la différence qu'ici l'arbre du moteur M est fixé au carter interne 18 au lieu d'être fixé à la vis 12. Egalement de manière différente à l'actionneur précédemment décrit, la vis 12 est rigidement fixée à un bâti accueillant le réducteur et le moteur M est monté coulissant selon l'axe X par rapport au bâti.

Le réducteur comporte également des éléments supplémentaires destinés à augmenter la capacité de réduction d'un tel réducteur. En l'occurrence, ces éléments supplémentaires sont des rouleaux externes filetés 28 et un carter externe 30.

Les rouleaux internes 14 sont donc agencés autour de la vis 12 tandis que les rouleaux externes 28 sont agencés périphériquement au carter interne 18 et sont, tout comme les rouleaux internes 14, chacun munis d'un seul filet 28A. Les rouleaux externes 28 sont logés dans une cage (non représentée) de forme sensiblement identique à celle précédemment décrite dont le diamètre est adapté pour accueillir le carter interne 18 et les rouleaux externes 28.

Le carter externe 30 entoure la cage et a une forme cylindrique coaxiale avec la vis 12. Le carter externe 30 comporte un taraudage pourvu de six filets 30A sur sa paroi interne. Un élément E destiné à être déplacé en translation est rigidement fixé à une extrémité 32 du carter externe 30 dont toute rotation est interdite.

Les rouleaux externes 28 viennent chacun en prise directe avec le carter externe 30 et avec le carter interne 18. Le filet 28A de chaque rouleau externe 28 est orienté en sens inverse des filets 18B du carter interne 18 et dans le même sens que les filets du carter externe 30.

Nous allons maintenant présenter le fonctionnement du réducteur 23. Lorsque le moteur électrique M est actionné selon un premier sens de rotation, les rouleaux internes 14, qui sont en prise directe avec le carter interne 18, sont entraînés en rotation autour de l'axe X de la vis et également en rotation sur eux-mêmes selon leurs axes propres. Ces mouvements de rotation génèrent un déplacement en translation de la cage et des rouleaux selon un mouvement de translation T1 parallèle à l'axe X. Comme les rouleaux internes 14 se déplacent en translation sur la vis 12 qui est fixe, le carter interne 18 et l'arbre du moteur M sont entraînés par les rouleaux internes 14 selon un mouvement de translation T2 parallèle à l'axe X.

Concernant les rouleaux externes 28, ceux-ci sont entraînés en rotation par le carter interne 18, et évoluent selon un mouvement de translation T3 parallèle à l'axe X.

Enfin, la rotation des rouleaux externes 28 entraîne le carter externe selon un mouvement de translation T4 parallèle à l'axe X.

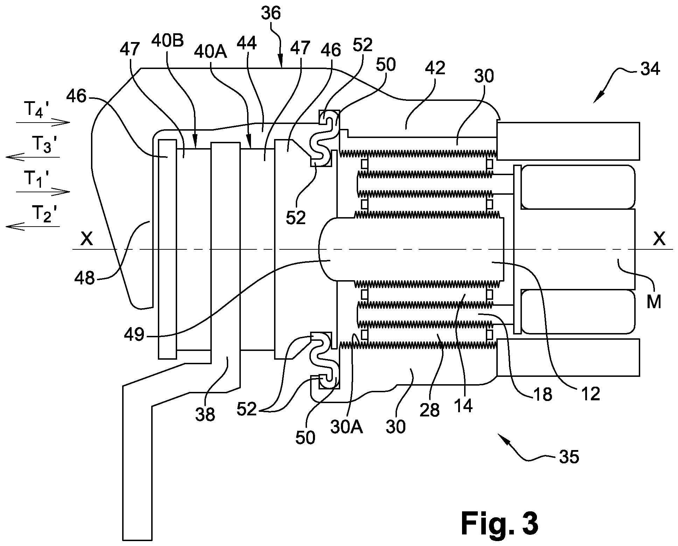

En référence à la figure 3, on va maintenant décrire un mode de réalisation de l'invention dans lequel, comme dans le précédent réducteur présenté, le réducteur est un actionneur électromécanique de freinage 34 de véhicule faisant partie intégrante d'un dispositif de freinage 35 de type frein à disque. Un tel dispositif de freinage 35 comprend ledit actionneur 34, un disque de frein 38, des plaquettes de frein 40A, 40B et un étrier flottant 36.

L'étrier flottant 36 comporte une partie d'attache 42, un passage de disque 44 et un mors d'appui 48.

L'extrémité de l'étrier flottant comportant la partie d'attache 42 est rigidement fixée au carter externe 30 du réducteur de l'actionneur 34. L'autre extrémité de l'étrier flottant comporte le mors d'appui 48, lequel s'étend parallèlement au disque 38 et porte une des plaquettes 40B. Entre les deux extrémités de l'étrier flottant 36, le passage de disque 44 forme un logement pour le disque 38 et les plaquettes 40A, 40B.

De manière classique, les plaquettes de freins 40A, 40B sont disposées latéralement, de part et d'autre du disque 38 et comportent chacune un support métallique 46 recouvert d'une garniture 47. On distingue la plaquette de frein intérieure 40A dont le support 46 est rigidement fixé à une extrémité 49 de la vis 12, et la plaquette extérieure 40B dont le support 46 est rigidement fixé au mors d'appui de l'étrier. Un joint d'étanchéité circulaire déformable 50 est disposé autour de la plaquette intérieure et relie un bord de la plaquette de frein intérieure à un bord du carter externe. A cet effet, les plaquettes, l'étrier et le carter comportent chacun un logement 52 adapté pour accueillir des parties d'attache du joint. Ce joint est destiné à isoler l'actionneur de toute pollution extérieure.

L'actionneur 34 comporte un réducteur dit à double étage de réduction de conception sensiblement semblable à celui du réducteur décrit précédemment. Les éléments constitutifs sont donc agencés comme précédemment, à la différence près que dans ce mode de réalisation la vis 12 est configurée pour translater parallèlement à l'axe X, de telle sorte que la vis forme un piston dont l'extrémité reliée à la plaquette de frein est adaptée pour venir au contact du disque de frein 38. Dans cet exemple, le carter interne 18 entraîné par le moteur est fixe en translation.

On va maintenant décrire le fonctionnement de l'actionneur de freinage 34 utilisé dans le dispositif de freinage 35 ci-dessus.

Lorsque le moteur électrique M est actionné selon un premier sens de rotation, le carter interne 18 entre en rotation. Les rouleaux internes 14, qui sont en prise directe avec le carter interne 18, sont entraînés en rotation autour de leur axe propre et, autour de l'axe X de la vis 12. Ils sont également déplacés selon un mouvement de translation T1' parallèle à l'axe X.

La rotation des rouleaux internes 18 entraine ainsi une translation T2' de la vis 12 selon l'axe X, dans un sens dit positif, de telle sorte que l'extrémité 49 de la vis déplace la plaquette de frein intérieure 40A et pousse celle-ci contre le disque de frein 38 pour générer une partie du freinage du véhicule.

Par ailleurs, la rotation du carter interne 18 entraine les rouleaux externes 28 en rotation autour de leur axe propre et autour de l'axe X. Aussi, les rouleaux externes évoluent selon un mouvement de translation T3' parallèle à l'axe X.

Enfin, la rotation des rouleaux externes 28 entraîne le carter externe 30 selon un mouvement de translation T4' parallèle à l'axe X, dans un sens dit négatif, générant ainsi un déplacement en translation de l'étrier dans le sens négatif. La plaquette externe 40B vient donc en contact avec le disque de frein 38, générant ainsi une autre partie du freinage du véhicule. Le disque 38 est donc pressé entre les deux plaquettes 40A, 40B.

On comprend que lorsque l'arbre du moteur électrique M tourne dans l'autre sens, les mouvements de rotation et de translation décrits ci-avant sont inversés et que les plaquettes de frein translatent parallèlement à l'axe X en s'éloignant du disque de frein.

L'invention n'est pas limitée au mode de réalisation présenté et d'autres modes de réalisation apparaîtront clairement à l'homme du métier. Il est notamment possible de prévoir, en variante du réducteur de la figure 1, que le moteur électrique est relié au carter 18, et que c'est la vis 12 qui est déplacée en translation et fait évoluer l'élément E.

En variante, on peut aussi prévoir que le réducteur de la figure 2 comporte un carter externe 30 qui est fixe et que c'est la vis 12 qui est mue en translation en portant l'élément E.

Également, en variante du mode de réalisation, on peut prévoir que le moteur n'est pas fixé au carter interne, mais qu'il entraîne directement une des deux cages de logement des rouleaux en rotation.

Enfin, on précise que le réducteur selon l'invention est applicable à d'autres domaines que le freinage.

### Nomenclature

10 : réducteur
12: vis
12A : filets de la vis
14 : rouleaux ; rouleaux internes
14 A : filet d'un rouleau ; filet d'un rouleau interne
16 : cage
18 : carter ; carter interne
18 A : filets du taraudage du carter ; filets du taraudage du carter interne
18 B : filets sur paroi externe du carter interne
20 : extrémité de la vis
21 : logements
22 : extrémité du carter
23 : réducteur dit « à double étage de réduction »
24 : pions de positionnement
26 : alésages
28 : rouleaux externes
28 A : filet d'un rouleau externe
30 : carter externe
30 A : filets du taraudage du carter externe
32 : extrémité du carter externe
34 : actionneur de freinage
35 : dispositif de freinage
36 : étrier flottant
38 : disque de frein
40 : plaquettes de frein
42 : partie d'attache
44 : passage de disque
46 : support
47 : garniture
49 : extrémité de la vis
50 : joint d'étanchéité
52 : logement
T1 : mouvement de translation des rouleaux internes
T2 : mouvement de translation du carter interne
T3 : mouvement de translation des rouleaux externes
T4 : mouvement de translation du carter externe
T1' : mouvement de translation des rouleaux internes
T2' : mouvement de translation de la vis
T3' : mouvement de translation des rouleaux externes
T4' : mouvement de translation du carter externe
E : élément destiné à être déplacé en translation
M : moteur électrique
X : axe de la vis

## Revendications

1. Réducteur qui comporte :
- un bâti,
- une vis (12) présentant un axe longitudinal X,
- des rouleaux internes filetés (14), et
- un carter interne (18) taraudé et fileté,
les rouleaux internes (14) étant chacun en prise d'une part avec la vis (12) et d'autre part avec le carter interne (18) au moyen d'au moins un filet (14A) orienté en sens inverse d'un filet (12A) de la vis (12) et dans le même sens qu'un filet (18A) du taraudage du carter interne, le réducteur comprenant en outre :
- un carter externe taraudé (30),
- des rouleaux externes (28) en prise chacun d'une part avec le carter interne (18) et d'autre part avec le carter externe (30), les rouleaux externes (28) étant munis d'au moins un filet (28A) orienté en sens inverse d'un filet (18B) du filetage du carter interne (18) et dans le même sens qu'un filet (30A) du taraudage du carter externe (30) ;
**caractérisé en ce que** le carter interne (18) est fixe en translation par rapport au bâti, le réducteur étant agencé de sorte que lorsque le carter interne (18) tourne autour de l'axe X, il entraîne une rotation autour de l'axe X des rouleaux internes (14) entraînant une translation de la vis (12) par rapport au bâti selon l'axe X dans un premier sens, et une rotation des rouleaux externes (28) autour de l'axe X entraînant le carter externe (30) suivant un mouvement de translation par rapport au bâti parallèle à l'axe X, dans un deuxième sens opposé au premier sens, la rotation du carter interne (18) autour de l'axe X entraînant également les rouleaux internes (14) en rotation autour de leur axe propre et suivant un mouvement de translation par rapport au bâti parallèle à l'axe X, et les rouleaux externes (28) en rotation autour de leur axe propre et suivant un mouvement de translation par rapport au bâti parallèle à l'axe X.

2. Réducteur selon la revendication précédente dans lequel la vis (12) et le taraudage du carter interne (18) comportent chacun plusieurs filets, de préférence au moins trois filets (12A, 18A).

3. Réducteur selon au moins l'une quelconque des revendications précédentes dans lequel les rouleaux internes (14) sont en prise directe avec la vis (12) et le carter interne (18).

4. Réducteur selon au moins l'une quelconque des revendications 1 à 3, dans lequel aucun des rouleaux (14, 28) n'est en prise directe avec un autre des rouleaux (14, 28).

5. Réducteur selon au moins l'une quelconque des revendications précédentes, configuré pour être commandé électriquement.

6. Actionneur (34) de freinage de véhicule, comportant un réducteur selon au moins l'une quelconque des revendications 1 à 5, et configuré pour actionner un frein de service ou un frein de parking d'un véhicule.

7. Actionneur (34) selon la revendication 6, configuré pour commander un frein à disque.

8. Actionneur (34) selon la revendication 7, comprenant un étrier flottant (36) sur lequel est rigidement fixée une plaquette de frein (40B).

9. Frein à disque comportant un actionneur (34) entraîné par un moteur électrique, l'actionneur étant conforme à l'une des revendications 6 à 8.

## Patentansprüche

1. Reduzierstück aufweisend:
- einen Rahmen,
- eine Schraube (12) mit einer Längsachse X,
- Innenrollen (14) mit Gewinde; und
- ein Innengehäuse (18) mit Innengewinde und Außengewinde,
wobei die Innenrollen (14) jeweils einerseits mit der Schraube (12) und andererseits mit dem Innengehäuse (18) mittels mindestens eines Gewindes (14A) in Eingriff stehen, das in der entgegengesetzten Richtung eines Gewindes (12A) der Schraube (12) ausgerichtet ist, und in der gleichen Richtung wie ein Gewinde (18A) des Innengewindes des Innengehäuses,
wobei das Reduzierstück ferner aufweist:
- ein Außengehäuse (30) mit Innengewinde,
- Außenrollen (28), die jeweils einerseits mit dem Innengehäuse (18) und andererseits mit dem Außengehäuse (30) in Eingriff stehen, wobei die Außenrollen (28) mit mindestens einem Innengewinde (28A) versehen sind, das in entgegengesetzter Richtung zu einem Gewinde (18B) des Außengewindes des Innengehäuses (18) und in der gleichen Richtung wie ein Gewinde (30A) des Innengewindes des Außengehäuses (30) ausgerichtet ist;
**dadurch gekennzeichnet, dass** das Innengehäuse (18) in Bezug auf den Rahmen translatorisch fixiert ist, wobei das Reduzierstück so angeordnet ist, dass, wenn sich das Innengehäuse (18) um die X-Achse dreht, es eine Drehung der Innenrollen (14) um die X-Achse bewirkt, die eine translatorische Bewegung der Schraube (12) relativ zum Rahmen entlang der X-Achse in einer ersten Richtung bewirkt, und eine Drehung der Außenrollen (28) um die X-Achse bewirkt, dass das Außengehäuse (30) einer in Bezug auf den Rahmen translatorischen Bewegung parallel zur X-Achse in einer zweiten Richtung, die der ersten Richtung entgegengesetzt ist, folgt, wobei die Drehung des Innengehäuses (18) um die X-Achse auch bewirkt, dass sich die Innenrollen (14) um ihre eigene Achse drehen und einer translatorischen Bewegung relativ zum Rahmen parallel zur Achse X folgen, und die Außenrollen (28) sich um ihre eigene Achse drehen und einer translatorischen Bewegung relativ zum Rahmen parallel zur Achse X folgen.

2. Reduzierstück nach dem vorhergehenden Anspruch, bei dem die Schraube (12) und das Gewinde des Innengehäuses (18) jeweils mehrere Gewinde aufweisen, vorzugsweise mindestens drei Gewinde (12A, 18A).

3. Reduzierstück nach mindestens einem der vorhergehenden Ansprüche, bei dem die Innenrollen (14) in direktem Kontakt mit der Schraube (12) und dem Innengehäuse (18) stehen.

4. Reduzierstück nach mindestens einem der Ansprüche 1 bis 3, wobei keine der Rollen (14, 28) in direktem Kontakt mit einer anderen der Rollen (14, 28) steht.

5. Reduzierstück nach mindestens einem der vorhergehenden Ansprüche, das konfiguriert ist, elektrisch angesteuert zu werden.

6. Aktuator (34) einer Fahrzeugbremse, der ein Reduzierstück nach mindestens einem der Ansprüche 1 bis 5 und aufweist und zum Betätigen einer Betriebsbremse oder einer Parkbremse eines Fahrzeugs konfiguriert ist.

7. Aktuator (34) nach Anspruch 6, der zum Antreiben einer Scheibenbremse konfiguriert ist.

8. Aktuator (34) nach Anspruch 7, der eine Schwimmsattelbremse (36) aufweist, an dem ein Bremsklotz (40B) starr befestigt ist.

9. Scheibenbremse mit einem von einem Elektromotor angetriebenen Aktuator (34), wobei der Aktuator konform einem Aktuator gemäß einem der Ansprüche 6 bis 8 ist.

## Claims

1. Reducer comprising
- a frame,
- a screw (12) having a longitudinal axis X,
- threaded inner rollers (14), and
- a tapped and threaded inner housing (18),
the inner rollers (14) being each engaged firstly with the screw (12) and secondly with the inner housing (18) via at least one thread (14A) directed in the opposite direction of a thread (12A) of the screw (12) and in the same direction as a thread (18A) of the tapping in the inner housing, the reducer further comprising
- a tapped outer housing (30),
- outer rollers (28) each engaged firstly with the inner housing (18) and secondly with the outer housing (30), the outer rollers (28) being provided with at least one thread (28A) directed in the opposite direction of a thread (18B) of the thread of the inner housing (18) and in the same direction as a thread (30A) of the tapping in the outer housing (30);
**characterised in that** the inner housing (18) is fixed in translation relative to the frame, the reducer being arranged such that when the inner housing (18) rotates about the axis X, it drives a rotation about the axis X of the inner rollers (14) translating the screw (12) relative to the frame along the axis X in a first direction, and a rotation of the outer rollers (28) about the axis X driving the outer housing (30) along a translation movement relative to the frame parallel to the axis X, in a second direction opposite to the first direction, the rotation of the inner housing (18) about the axis X also driving the inner rollers (14) in rotation about their own axes and along a translation movement relative to the frame parallel to the axis X, and the outer rollers (28) in rotation about their own axes and along a translation movement relative to the frame parallel to the axis X.

2. Reducer according to the preceding claim, wherein the screws (12) and the tapping of the inner housing (18) each comprise several threads, preferably at least three threads (12A, 18A).

3. Reducer according to at least any one of the preceding claims, wherein the inner rollers (14) are engaged directly with the screw (12) and the inner housing (18).

4. Reducer according to at least any one of claims 1 to 3, wherein none of the rollers (14, 28) is engaged directly with another one of the rollers (14, 28).

5. Reducer according to at least any one of the preceding claims, configured to be controlled electrically.

6. Vehicle braking actuator (34) comprising a reducer according to at least any one of claims 1 to 5, and configured to actuate a vehicle service brake or parking brake.

7. Actuator (34) according to claim 6, configured to control a disc brake.

8. Actuator (34) according to claim 7, comprising a floating calliper (36) to which a brake pad (40B) is rigidly attached.

9. Disc brake comprising an actuator (34) driven by an electric motor, the actuator being according to one of claims 6 to 8.
